(19) **Europäisches Patentamt / European Patent Office / Office européen des brevets**

(11) **EP 4 530 823 B1**

(12) **FASCICULE DE BREVET EUROPEEN**

(45) Date de publication et mention de la délivrance du brevet:
**05.11.2025 Bulletin 2025/45**

(51) Classification Internationale des Brevets (IPC):
**G06F 7/544** (2006.01)   **H04L 9/30** (2006.01)
**H10D 30/67** (2025.01)   **H10D 86/00** (2025.01)

(21) Numéro de dépôt: **24199572.9**

(22) Date de dépôt: **10.09.2024**

(52) Classification Coopérative des Brevets (CPC):
**G06F 7/5443; H04L 9/3093; H10D 30/6711; H10D 86/201**

(54) **CIRCUIT NUMÉRIQUE DE CALCUL APPROXIMATIF POUR DES APPLICATIONS DE CRYPTOGRAPHIE POST-QUANTIQUE**

DIGITALE SCHALTUNG ZUR NÄHERUNGSWEISEN BERECHNUNG FÜR ANWENDUNGEN DER POST-QUANTENKRYPTOGRAPHIE

DIGITAL APPROXIMATE COMPUTING CIRCUIT FOR POST-QUANTUM CRYPTOGRAPHY APPLICATIONS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **28.09.2023 FR 2310361**

(43) Date de publication de la demande:
**02.04.2025 Bulletin 2025/14**

(73) Titulaire: **Commissariat à l'Energie Atomique et aux Energies Alternatives**
**75015 Paris (FR)**

(72) Inventeurs:
• **VALEA, Emanuele**
  38054 GRENOBLE (FR)
• **WACQUEZ, Romain**
  38054 GRENOBLE CEDEX 09 (FR)

(74) Mandataire: **Brevalex**
**Tour Trinity**
**1 B Place de la Défense**
**92400 Courbevoie (FR)**

(56) Documents cités:
• **DAVIDE BELLIZIA: "When Bad News Become Good News : Towards Usable Instances of Learning with Physical Errors", 31 August 2022 (2022-08-31), pages 1 - 24, XP093158734, ISSN: 2569-2925, Retrieved from the Internet <URL:https://orbilu.uni.lu/bitstream/10993/52557/1/document.pdf> [retrieved on 20240502], DOI: 10.46586/tches.v2022.i4.1-24**
• **KAMEL DINA ET AL: "Learning with Physical Noise or Errors", IEEE TRANSACTIONS ON DEPENDABLE AND SECURE COMPUTING, IEEE SERVICE CENTER, NEW YORK, NY, US, vol. 17, no. 5, 27 April 2018 (2018-04-27), pages 957 - 971, XP011806274, ISSN: 1545-5971, [retrieved on 20200817], DOI: 10.1109/TDSC.2018.2830763**

## Description

### Domaine de l'invention

La présente invention appartient au domaine des circuits numériques de calcul approximatif pour des applications de cryptographie, et plus particulièrement pour des applications de cryptographie post-quantique.

### Etat de la technique

La cryptographie post-quantique concerne les algorithmes de chiffrement pouvant résister à des attaques mathématiques utilisant un ordinateur quantique.

A la différence d'un ordinateur classique qui travaille sur des données binaires, un ordinateur quantique travaille sur des qubits dont l'état quantique peut posséder une valeur quantique comportant plusieurs possibilités simultanées. Le calcul quantique se prête particulièrement bien aux problèmes dont la complexité de calcul réside dans la combinatoire. On trouve notamment ces problèmes dans la cryptographie. Les grandes capacités de factorisation d'un calculateur quantique permettraient ainsi de casser mathématiquement de nombreux systèmes cryptographiques conventionnels, notamment des méthodes de chiffrement asymétriques basées sur l'algorithme RSA.

L' « apprentissage avec erreurs », ou LWE (acronyme anglais de « Learning With Errors ») est un problème calculatoire supposé difficile qui est à la base de nombreux algorithmes de chiffrement récents utilisés en cryptographie post-quantique.

Une implémentation conventionnelle d'une primitive cryptographique basée sur LWE consiste à générer des erreurs qui suivent une distribution d'erreur prédéterminée, et à ajouter ces erreurs dans des calculs exacts. La génération d'erreurs avec un générateur de nombres aléatoires (ou pseudo-aléatoires) matériel (TRNG pour « True Random Number Generator », ou PRNG pour « Pseudo-Random Number Generator ») entraine cependant des problèmes de performances.

Le document « When Bad News Become Good News - Towards Usable Instances of Learning With Physical Errors », D. BELLIZIA et al., IACR Transactions on Cryptographic Hardware and Embedded Systems, pp. 1-24, Aug. 2022, divulgue un circuit numérique pour calculer un produit scalaire de deux vecteurs. Ce circuit peut servir de brique de base pour implémenter un algorithme de type LWE. Dans l'architecture proposée, chaque vecteur comporte 128 nombres codés chacun sur 8 bits. Le circuit numérique comporte un multiplieur parallèle capable de calculer 128 multiplications en parallèle, ainsi que sept étages d'additionneurs parallèles. Les additionneurs des différents étages effectuent chacun en parallèle un nombre d'additions respectivement égal à 64, 32, 16, 8, 4, 2 puis 1. Des registres à décalage (bascules flip-flop) sont intercalés entre deux étages d'additionneurs pour introduire une erreur dans l'échantillonnage du bit de poids faible du résultat de deux des additions. L'architecture proposée est particulièrement complexe et elle présente un encombrement assez important.

Dans un autre domaine, pour les circuits numériques de calcul intensif utilisés dans des applications présentant une certaine résilience aux erreurs (par exemple pour l'implémentation de réseaux de neurones pour le traitement d'image), il est connu d'introduire des simplifications dans le circuit numérique afin d'optimiser sa consommation énergétique et/ou son encombrement au détriment de la précision du calcul. On parle alors de « calcul approximatif » (« approximate computing » dans la littérature anglo-saxonne). Le circuit numérique est alors synthétisé spécifiquement pour faire des calculs avec une certaine probabilité d'erreur. Il n'y a alors généralement pas moyen de contrôler dynamiquement la probabilité d'erreur introduite dans les calculs par le circuit numérique.

### Exposé de l'invention

La présente invention a pour objectif de remédier à tout ou partie des inconvénients de l'art antérieur, notamment ceux exposés ci-avant.

A cet effet, et selon un premier aspect, il est proposé par la présente invention, un circuit numérique pour calculer un produit scalaire entre deux vecteurs de dimension $N$, $N$ étant un nombre entier au moins égal à deux. Les deux vecteurs sont notés respectivement $(a_0, a_1, \ldots, a_j, \ldots, a_{N-1})$ et $(s_0, s_1, \ldots, s_j, \ldots, s_{N-1})$. Le circuit numérique comporte un multiplieur, un accumulateur comportant au moins un additionneur et un registre, ainsi qu'un circuit de contrôle de l'accumulateur. Le circuit numérique est configuré pour être cadencé par une horloge, et à un coup d'horloge d'indice $j$, $j$ étant un nombre entier variant entre 0 et $(N - 1)$ :

- le multiplieur est configuré pour calculer un résultat $r_j$ d'une multiplication $a_j \times s_j$ des composantes d'indice $j$ des deux vecteurs,
- l'accumulateur est configuré pour additionner le résultat $r_j$ de la multiplication avec une valeur courante du registre, et pour mémoriser un résultat de l'addition dans le registre ;

- le circuit de contrôle est configuré pour contrôler l'accumulateur de sorte à effectuer l'addition de façon approximative, c'est-à-dire avec un niveau prédéterminé de probabilité que le résultat de l'addition comporte une erreur, pour au moins une addition parmi les $N$ additions du calcul du produit scalaire.

Ce circuit numérique est particulièrement bien adapté pour servir d'accélérateur matériel pour une primitive cryptographique basée sur un algorithme d' « apprentissage avec erreurs » (LWE). Le calcul de produit scalaire est en effet à la base de ce type d'algorithme.

Le circuit de contrôle permet d'injecter une erreur pour une ou plusieurs additions du calcul du produit scalaire. Cela permet d'implémenter un algorithme de type LWE sans avoir à utiliser de générateur matériel de nombres aléatoires (ou pseudo-aléatoires) (TRNG ou PRNG), tout en gardant une architecture particulièrement simple et compacte. Notamment, et contrairement à la solution présentée dans l'art antérieur, il n'y a pas besoin de cascader plusieurs étages d'additionneurs et il n'y a pas besoin d'ajouter de banc de registres.

La solution proposée présente une architecture compacte, avec un encombrement réduit (faible surface occupée par le circuit) et une consommation énergétique relativement faible.

L'architecture proposée confère de la flexibilité sur le niveau de probabilité d'erreur souhaité pour le calcul du produit scalaire. Il est par exemple possible de modifier dynamiquement, via le circuit de contrôle, le nombre d'additions devant être exécutées de façon approximative dans le but de modifier la distribution d'erreur. L'architecture proposée permet en outre d'ajouter de l'entropie dans la distribution d'erreur obtenue, notamment en jouant sur le choix de l'addition ou des additions devant être exécutées de façon approximative dans le calcul du produit scalaire.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation :

- l'accumulateur comporte un unique additionneur implémenté selon la technologie « silicium sur isolant totalement déserté », FDSOI ;
- une région prédéterminée de l'additionneur regroupe des transistors FDSOI formant des portes logiques qui contrôlent un nombre $L$ prédéterminé de bits de poids faible du résultat de l'addition, $L$ étant un nombre entier au moins égal à un ;
- ladite région prédéterminée est connectée à une source de tension permettant d'appliquer une tension de grille arrière aux transistors FDSOI de la région, la valeur de la tension de grille arrière pouvant être contrôlée dynamiquement par le circuit de contrôle,
- le circuit de contrôle est configuré pour appliquer par défaut une valeur de référence de tension de grille arrière, et pour appliquer une valeur spécifique de tension de grille arrière, différente de la valeur de référence, uniquement pendant l'exécution de ladite au moins une addition devant être effectuée de façon approximative.

De telles dispositions correspondent à une architecture particulièrement compacte (circuit numérique avec un unique additionneur) avec un niveau de flexibilité accru sur la distribution d'erreur pouvant être obtenue. Il est en effet possible de modifier dynamiquement la distribution d'erreur en fonction de la valeur de la tension de grille arrière appliquée. La tension de grille arrière permet de faire varier la tension de seuil des transistors FDSOI. Une tension de seuil plus élevée entraine une augmentation du temps de propagation des portes logiques implémentés par les transistors, et par conséquent une perte de précision dans les calculs. La prédétermination de la région concernée (qui dépend du nombre de bits de poids faible que l'on souhaite être impactés par le calcul approximatif) participe également à la définition de la distribution d'erreur.

Dans des modes particuliers de réalisation, le circuit de contrôle est configuré pour déterminer dynamiquement la valeur spécifique de tension de grille arrière à appliquer en fonction d'un niveau de probabilité d'erreur souhaité pour le calcul du produit scalaire.

Dans des modes particuliers de réalisation, les transistors FDSOI sont agencés en structures CMOS comportant chacune un transistor NMOS sur un puits P et un transistor PMOS sur un puits N.

Cela correspond à un circuit numérique avec des composants CMOS de structure traditionnelle (« Regular Well » en anglais) optimisés pour une polarisation inverse de grille arrière (« Reverse Body Bias » ou RBB dans la littérature anglo-saxonne). Dans une telle configuration, la polarisation inverse de grille arrière (RBB) est appliquée pour augmenter la tension de seuil du transistor. Le transistor est alors de type RVT (acronyme anglais de « Regular Voltage Threshold », en français « tension de seuil régulière »).

Dans des modes particuliers de réalisation :

- l'accumulateur comporte un additionneur exact synthétisé spécifiquement pour calculer une addition de façon exacte, un additionneur approximatif synthétisé spécifiquement pour calculer une addition avec le niveau prédéterminé de probabilité d'erreur, et un multiplexeur ;

- pour chaque addition exécutée à un coup d'horloge d'indice *j*, le multiplexeur est configuré par le circuit de contrôle pour sélectionner l'additionneur à utiliser parmi l'additionneur exact et l'additionneur approximatif.

Cette architecture ne nécessite pas de source de tension dynamique, mais elle nécessite deux additionneurs et un multiplexeur.

Dans des modes particuliers de réalisation, ladite au moins une addition devant être exécutée de façon approximative, parmi les *N* additions du calcul du produit scalaire, est différente à chaque nouveau calcul de produit scalaire.

Dans des modes particuliers de réalisation, ladite au moins une addition devant être exécutée de façon approximative dans le calcul du produit scalaire est choisie aléatoirement.

Dans des modes particuliers de réalisation, le nombre d'additions devant être exécutées de façon approximative dans le calcul du produit scalaire est contrôlé dynamiquement par le circuit de contrôle en fonction d'un niveau de probabilité d'erreur souhaité pour le calcul du produit scalaire.

Selon un deuxième aspect, il est proposé par la présente invention, un dispositif électronique mettant en œuvre un algorithme cryptographique basé sur une technologie d' « apprentissage avec erreurs » (LWE). Le dispositif comporte au moins un circuit numérique selon l'un quelconque des modes de réalisation précédents.

**Présentation des figures**

L'invention sera mieux comprise à la lecture de la description suivante, donnée à titre d'exemple nullement limitatif, et faite en se référant aux figures 1 à 7 qui représentent :

[Fig. 1] une représentation schématique générique d'un circuit numérique selon l'invention, pour le calcul d'un produit scalaire entre deux vecteurs,

[Fig. 2] une représentation schématique d'un premier mode particulier de réalisation du circuit numérique illustré à la figure 1,

[Fig. 3] une représentation schématique d'un deuxième mode particulier de réalisation du circuit numérique illustré à la figure 1,

[Fig. 4] une représentation schématique d'un transistor FDSOI,

[Fig. 5] une représentation schématique d'une structure CMOS FDSOI optimisée pour le mode RBB,

[Fig. 6] une représentation schématique d'un additionneur 8-bit, avec l'identification d'une région particulière de l'additionneur qui impacte le bit de poids le plus faible du résultat de l'addition,

[Fig. 7] un graphique illustrant la possibilité de contrôler le niveau de probabilité d'erreur de l'additionneur en fonction de la tension de grille arrière appliquée.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée de l'invention**

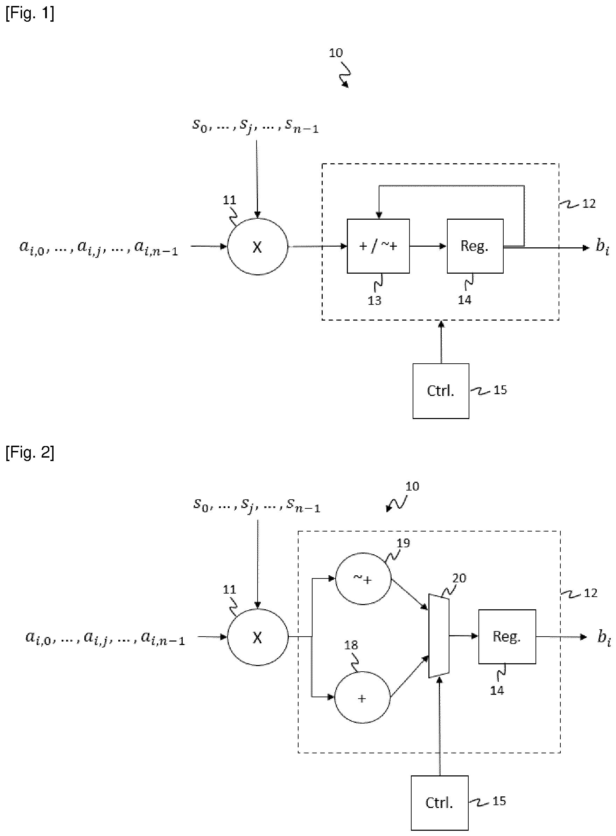

La figure 1 représente schématiquement un circuit numérique 10 selon l'invention. Le circuit numérique 10 est configuré pour calculer un produit scalaire entre deux vecteurs de dimension *N*, *N* étant un nombre entier au moins égal à deux. Dans l'exemple illustré sur la figure 1, les deux vecteurs sont notés respectivement $(a_{i,0}, a_{i,1}, ..., a_{i,j}, ..., a_{i,N-1})$ et $(s_0, s_1, ..., s_j, ..., s_{N-1})$. Les composantes $a_{i,j}$ et $s_j$ de ces deux vecteurs, *j* étant un nombre entier variant entre 0 et $(N - 1)$, correspondent par exemple chacune à un nombre entier codé sur $N_B$ bits, $N_B$ étant un nombre entier au moins égal à un.

Le circuit numérique 10 est configuré pour calculer le produit scalaire $b_i$ des deux vecteurs :

[Math.1]

$$b_i = \sum_{j=0}^{N-1} a_{i,j} \cdot s_j$$

Répéter cette opération pour *N* vecteurs ($a_{i,0}$, $a_{i,1}$, ... , $a_{i,j}$, ..., $a_{i,N-1}$) différents, en faisant varier l'indice *i* entre 0 et (*N* - 1), revient alors à calculer le produit matriciel suivant :

[Math.2]

$$\begin{pmatrix} a_{0,0} & \cdots & a_{0,N-1} \\ \vdots & \ddots & \vdots \\ a_{N-1,0} & \cdots & a_{N-1,N-1} \end{pmatrix} \begin{pmatrix} s_0 \\ \vdots \\ s_{N-1} \end{pmatrix} = \begin{pmatrix} b_0 \\ \vdots \\ b_{N-1} \end{pmatrix}$$

Comme on le verra par la suite, au lieu de calculer cette opération de façon exacte, le circuit numérique 10 est configuré pour calculer cette opération de façon approximative, c'est-à-dire de telle sorte que le résultat obtenu soit entaché d'une erreur présentant une distribution prédéterminée :

[Math.3]

$$\begin{pmatrix} a_{0,0} & \cdots & a_{0,N-1} \\ \vdots & \ddots & \vdots \\ a_{N-1,0} & \cdots & a_{N-1,N-1} \end{pmatrix} \begin{pmatrix} s_0 \\ \vdots \\ s_{N-1} \end{pmatrix} + \begin{pmatrix} e_0 \\ \vdots \\ e_{N-1} \end{pmatrix} = \begin{pmatrix} b_0 \\ \vdots \\ b_{N-1} \end{pmatrix}$$

Chaque élément $e_j$ correspond à une erreur selon une distribution d'erreur prédéterminée.

Un tel calcul est à la base des primitives cryptographiques fondées sur l'apprentissage avec erreurs (LWE). Le circuit numérique 10 est donc particulièrement bien adapté pour être utilisé comme accélérateur matériel pour implémenter ce type de primitives cryptographiques.

Tel qu'illustré sur la figure 1, le circuit numérique 10 comporte un multiplieur 11, un accumulateur 12 et un circuit de contrôle 15 de l'accumulateur 12. L'accumulateur 12 comporte au moins un additionneur 13 et un registre 14. Le circuit numérique 10 est configuré pour être cadencé par une horloge.

Dans la suite, on s'intéresse au calcul du produit scalaire décrit à la formule [Math.1], pour un indice *i* donné. Le registre 14 est initialisé à zéro au début du calcul du produit scalaire. A un coup d'horloge d'indice *j*, le multiplieur 11 est configuré pour calculer un résultat $r_j$ d'une multiplication $a_{i,j} \times s_j$ des composantes d'indice *j* des deux vecteurs, et l'accumulateur 12 est configuré pour additionner le résultat $r_j$ de la multiplication avec une valeur courante du registre 14. Le résultat de l'addition est ensuite mémorisé dans le registre 14. Le résultat du calcul du produit scalaire décrit à la formule [Math.1] correspond alors à la valeur $b_i$ prise par le registre 14 après N coups d'horloge correspondant à la variation de l'indice *j* de 0 à (*N* - 1). Le résultat du calcul matriciel décrit par la formule [Math.2] peut quant à lui être obtenu au bout de $N^2$ coups d'horloge.

La particularité du circuit numérique 10 selon l'invention est que le circuit de contrôle 15 permet de contrôler dynamiquement l'accumulateur 12 pour effectuer l'opération d'addition soit de façon exacte (ce qui est illustré par le symbole « + » dans les figures) soit de façon approximative (ce qui est illustré par le symbole « ~+ » dans les figures). Effectuer l'addition de façon approximative revient à effectuer l'addition avec un niveau prédéterminé de probabilité que le résultat de l'addition comporte une erreur.

Plus particulièrement, le circuit de contrôle 15 est configuré pour contrôler l'accumulateur 12 de sorte à effectuer l'addition de façon approximative pour au moins une addition parmi les *N* additions du calcul du produit scalaire (c'est-à-dire pour au moins un coup d'horloge parmi les *N* coups d'horloge permettant le calcul du produit scalaire).

Le coup d'horloge d'indice *j* déclenche les deux opérations susmentionnées (le calcul du résultat $r_j$ de la multiplication $a_{i,j} \times s_j$, et l'addition du résultat $r_j$ de la multiplication avec la valeur courante du registre 14). Il convient toutefois de noter qu'il n'est pas essentiel que les *N* coups d'horloge d'indice *j* permettant le calcul du produit scalaire soient consécutifs. Autrement dit, il n'est pas indispensable que ces deux opérations soit effectuées pendant un unique coup d'horloge. Rien n'empêcherait par exemple d'effectuer la multiplication et l'addition sur deux coups d'horloge successifs *j* et *j'* (au lieu de les effectuer sur un seul coup d'horloge *j*). Procéder ainsi ne constitue qu'une variante de l'invention.

La figure 1 représente de façon générique un circuit numérique 10 selon l'invention. Le circuit numérique 10 peut être réalisé selon différents modes particuliers de réalisation.

La figure 2 représente schématiquement un premier mode particulier de réalisation du circuit numérique 10 illustré à la figure 1. Dans ce premier mode de réalisation, l'accumulateur 12 comporte à la fois un additionneur exact 18 et un additionneur approximatif 19. L'additionneur exact 18 est configuré spécifiquement pour calculer une addition de façon exacte. L'additionneur approximatif 19 est quant à lui configuré spécifiquement pour calculer une addition avec un niveau prédéterminé de probabilité d'erreur.

L'additionneur exact 18 correspond à un additionneur classique. Lors de la conception du circuit numérique 10, l'additionneur exact 18 est synthétisé spécifiquement pour calculer une addition de façon exacte. Autrement dit, la netlist de l'additionneur exact 18 est optimisée pour s'assurer que le résultat d'une addition effectuée par l'additionneur exact 18 présente une probabilité d'erreur nulle ou négligeable dans des conditions normales d'utilisation du circuit numérique 10.

Lors de la conception du circuit numérique 10, l'additionneur approximatif 19 est quant à lui synthétisé spécifiquement pour calculer une addition avec un niveau prédéterminé de probabilité d'erreur. Autrement dit, la netlist de l'additionneur approximatif 19 est modifiée pour s'assurer que le résultat d'une addition effectuée par l'additionneur approximatif 19 présente le niveau de probabilité d'erreur souhaité. L'additionneur 19 est ainsi approximé selon une approche « statique » (à la conception du circuit numérique 10).

Différentes microarchitectures peuvent être envisagées pour concevoir l'additionneur approximatif 19. A titre d'exemple, la librairie « EvoApproxLib LITE » propose un grand nombre de circuits d'additionneurs approximatifs associés à différents niveaux de probabilité d'erreur.

L'accumulateur 12 comporte en outre un multiplexeur 20. Pour chaque addition exécutée à un coup d'horloge d'indice $j$, le multiplexeur 20 est configuré par le circuit de contrôle 15 pour sélectionner l'additionneur à utiliser parmi l'additionneur exact 18 et l'additionneur approximatif 19. Avec de telles dispositions, le circuit de contrôle 15 est configuré pour contrôler l'accumulateur 12 de sorte à effectuer l'addition de façon approximative pour au moins une addition parmi les $N$ additions du calcul du produit scalaire (c'est-à-dire pour au moins un coup d'horloge parmi les $N$ coups d'horloge permettant le calcul du produit scalaire).

De façon avantageuse, il est possible de contrôler dynamiquement, via le circuit de contrôle 15, le nombre d'additions devant être exécutées de façon approximative dans le calcul du produit scalaire. Autrement dit, il est possible de contrôler dynamiquement le nombre de coups d'horloge (parmi les $N$ coups d'horloge permettant de calculer le produit scalaire) correspondant à des additions devant être exécutées de façon approximative.

De telles dispositions confèrent une certaine flexibilité sur le niveau de probabilité d'erreur souhaité pour le calcul du produit scalaire. En effet, plus le nombre d'additions exécutées de façon approximative est grand, et plus le niveau de probabilité d'erreur pour le calcul du produit scalaire est important. Il est par exemple possible de déterminer de façon empirique différents niveaux de probabilité d'erreur pour le calcul du produit scalaire en fonction de différentes valeurs du nombre d'additions exécutées de façon approximative au cours du calcul du produit scalaire. Il est alors ensuite possible de configurer le circuit de contrôle 15 pour déterminer le nombre d'additions devant être exécutées de façon approximative en fonction d'un niveau de probabilité d'erreur souhaité pour le calcul du produit scalaire.

Il est également envisageable de contrôler dynamiquement, via le circuit de contrôle 15, quelles additions doivent être effectuées de façon approximative dans le calcul du produit scalaire.

Autrement dit, il est envisageable de déterminer un nombre $K$ compris entre 1 et $(N - 1)$ et des entiers différents $p_0, ..., p_k, ..., p_K$ avec $0 \leq p_k \leq (N - 1)$ pour tout indice $k$ compris entre 0 et $K$, de telle sorte que le multiplexeur 20 soit configuré par le circuit de contrôle 15 pour sélectionner l'additionneur approximatif 19 sur les coups d'horloge d'indice $p_k$, et pour sélectionner l'additionneur exact 18 sur les autres coups d'horloge.

De telles dispositions permettent d'ajouter de l'entropie dans la distribution d'erreur obtenue. En particulier, il est envisageable de changer l'addition ou les additions exécutées de façon approximative à chaque nouveau calcul de produit scalaire (autrement dit, il est envisageable de faire varier l'ensemble des entiers $p_0, ..., p_k, ..., p_K$ à chaque nouveau calcul de produit scalaire). Cet ajout d'entropie est particulièrement intéressant dans les applications de cryptographie.

Il est également envisageable de configurer le circuit de contrôle 15 pour sélectionner de façon aléatoire les additions devant être effectuées de façon approximative dans le calcul du produit scalaire.

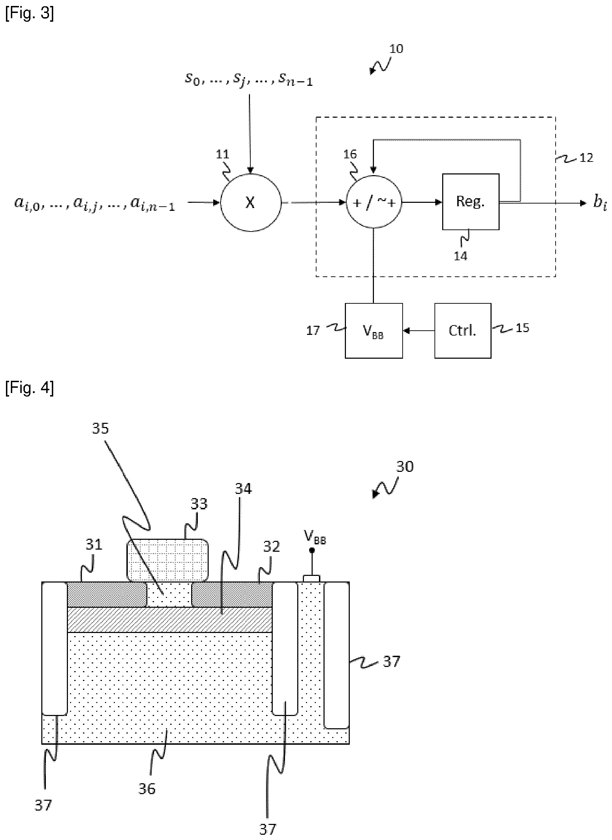

La figure 3 représente schématiquement un deuxième mode particulier de réalisation du circuit numérique 10 illustré à la figure 1. Dans ce deuxième mode de réalisation, l'accumulateur 12 comporte un unique additionneur 16 implémenté selon la technologie de fabrication de composants électroniques « silicium sur isolant totalement déserté » ou FDSOI (acronyme anglais pour « Fully Depleted Silicium On Insulator »).

La technologie FDSOI est connue pour surmonter certaines limitations de la technologie « CMOS sur substrat massif » (ou « CMOS bulk » en anglais, CMOS est l'acronyme anglais de « Complementary Metal-Oxyde Semiconductor »). En particulier, la technologie FDSOI offre de meilleures performances (notamment en termes de temps de transition et de fiabilité) et une consommation énergétique réduite par rapport à la technologie « CMOS bulk » (notamment, les transistors FDSOI peuvent opérer à des tensions plus faibles).

La figure 4 représente schématiquement un transistor 30 FDSOI. Tel qu'illustré sur la figure 4, le transistor FDSOI comporte un substrat 36 en silicium sur lequel est placée une couche 34 d'oxyde de silicium isolant ultra-mince. Le transistor 30 FDSOI comporte également, au-dessus de la couche 34 d'oxyde de silicium isolant, une source 31, un drain 32 et une grille 33. Une fine couche de silicium située au-dessus de la couche d'oxyde de silicium isolant forme un canal 35 homogène sous la grille 33. Comme la couche du canal 35 est très fine, aucun dopage du canal n'est nécessaire (c'est la raison pour laquelle on parle de transistor « totalement déserté »). Tel qu'illustré sur la figure 4, le transistor 30 FDSOI peut également comporter des tranchées isolantes 37.

Une caractéristique du transistor 30 FDSOI est que ses performances peuvent être modifiées en appliquant une tension $V_{BB}$ au niveau du substrat 36 formant sa face arrière. On parle alors de « polarisation de face arrière » ou de « polarisation de grille arrière ». La tension $V_{BB}$ est appelée « tension de grille arrière » (« back-gate voltage » en anglais) ou « polarisation de substrat » (« body bias voltage » en anglais). Cette polarisation du substrat 36 permet de faire varier la tension de seuil du transistor 30. La variation de la tension de seuil du transistor entraine un changement des performances du transistor en termes de rapidité, fiabilité et consommation énergétique.

Comme on le verra plus en détail par la suite, on distingue les transistors de type « Regular Well » et les transistors de type « Flip Well ». Un transistor de type « Regular Well » est basé sur une structure CMOS avec un caisson P sous le NMOS et un caisson N sous le PMOS, et il est optimisé pour le mode RBB (« Reverse Body Bias ») qui permet de privilégier des tensions de seuil élevées (transistor de type RVT). Un transistor de type « Flip Well » est basé sur une structure CMOS avec un caisson N sous le NMOS et un caisson P sous le PMOS), et il est optimisé pour le mode FBB (« Forward Body Bias ») qui permet de privilégier des tensions de seuil basses (transistor de type LVT, pour « Low Voltage Threshold »). La tension de seuil des transistors RVT est plus haute que celle des transistors LVT.

La polarisation du substrat 36 crée une « grille arrière » enfouie sous le canal 35. Le transistor agit alors comme un transistor à double grille. Cette caractéristique permet d'appliquer des tensions différentes à la grille 33 supérieure et à la grille arrière. Cette polarisation du substrat 36 est dénommée « body bias » en anglais. En appliquant cette polarisation selon des règles connues de l'homme de l'art (respect des conditions de polarisation entre le caisson N et le caisson P), on augmente la tension de seuil d'un transistor RVT (mode RBB), et on baisse la tension de seuil d'un transistor LVT (mode FBB).

La couche 34 d'oxyde de silicium isolant limite les fuites de courant dans le substrat 36, c'est la raison pour laquelle il est possible d'appliquer au substrat 36 du transistor 30 FDSOI une tension de grille arrière relativement élevée (cela n'est pas le cas avec la technologie « bulk »).

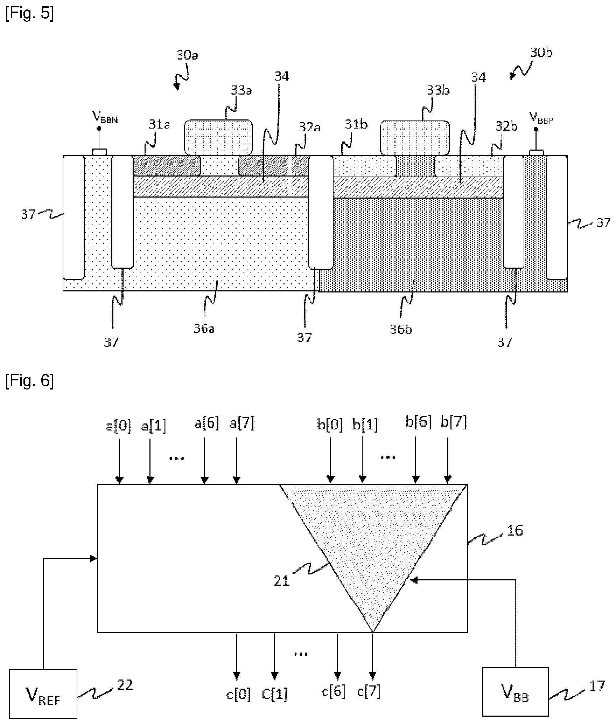

Lors de la conception du circuit numérique 10, et tel qu'illustré sur la figure 6, une région 21 particulière de l'additionneur est prédéterminée. Cette région 21 prédéterminée regroupe des transistors 30 FDSOI formant des portes logiques qui contrôlent un nombre $L$ prédéterminé de bits de poids faible du résultat de l'addition, $L$ étant un nombre entier au moins égal à un. Dans l'exemple illustré sur la figure 6, on considère un additionneur 8-bits (autrement dit l'additionneur 16 est configuré pour additionner un nombre $a$ codé sur huit bits avec un autre nombre $b$ codé sur huit bits, et pour fournir le résultat sous la forme d'un nombre $c$ codé sur huit bits également), et le nombre $L$ est égal à un (autrement dit, seul le bit $c[7]$ de poids le plus faible du résultat est impacté par la région 21 prédéterminée).

Tel qu'illustré sur la figure 6, la région 21 prédéterminée est connectée à une source de tension 17 permettant d'appliquer une tension de grille arrière aux transistors 30 FDSOI de la région 21. La valeur $V_{BB}$ de la tension de grille arrière peut être contrôlée dynamiquement par le circuit de contrôle 15. Les autres transistors qui implémentent l'additionneur 16 et qui ne font pas partie de la région 21 prédéterminée sont soumis à une tension de référence $V_{REF}$.

Tel qu'illustré sur la figure 3, le circuit de contrôle 15 est configuré pour contrôler la valeur de tension de grille arrière appliquée à la région 21 prédéterminée. Plus particulièrement, le circuit de contrôle 15 est configuré pour appliquer par défaut la valeur de référence de tension de grille arrière $V_{REF}$, et pour appliquer une valeur spécifique de tension de grille arrière $V_{BB}$, différente de la valeur de référence ($V_{REF} \neq V_{BB}$), uniquement pendant l'exécution de l'addition ou des additions devant être effectuées de façon approximative.

Le type de transistor (« Regular Well », « Flip Well ») et la valeur spécifique de tension de grille arrière $V_{BB}$ peuvent être choisis de telle sorte que la tension de seuil des transistors 30 FDSOI de la région 21 prédéterminée est plus élevée avec une tension de grille arrière égale à $V_{BB}$ qu'avec tension de grille arrière égale à $V_{REF}$. Avec de telles dispositions, le fait d'appliquer la valeur spécifique $V_{BB}$ de tension de grille arrière entraîne une dégradation des performances des transistors 30 FDSOI de la région 21 prédéterminée. Ainsi, pour les cycles d'horloge où la valeur spécifique $V_{BB}$ de tension de grille arrière est appliquée, l'additionneur 16 se comporte comme un additionneur approximatif. En revanche, pour les cycles d'horloge où la valeur de référence $V_{REF}$ de tension de grille arrière est appliquée, l'additionneur 16 se comporte comme un additionneur exact. On peut considérer par exemple que $V_{REF}$ est à 0V.

Il existe deux façons d'appliquer une polarisation au substrat 36 : le mode dit de « polarisation avant » (FBB, de l'acronyme anglais « Forward Body Bias ») et le mode dit de « polarisation inversé » (RBB, de l'acronyme anglais « Reverse Body Bias »).

De façon générale, pour un transistor NMOS, si $V_{BB}$ est positif, cela correspond à une « polarisation avant » (FBB), et donc à une amélioration des performances du transistor. En revanche si $V_{BB}$ est négatif, cela correspond à une « polarisation inverse » (RBB), et donc à une dégradation des performances du transistor.

Pour un transistor de type PMOS, c'est l'inverse : si $V_{BB}$ est positif, cela correspond à une « polarisation inverse » (RBB), et si $V_{BB}$ est négatif cela correspond à une « polarisation avant » (FBB).

Une structure CMOS comporte à la fois un transistor NMOS et un transistor PMOS. Une structure CMOS en technologie FDSOI peut être optimisée pour l'un ou pour l'autre des modes FBB et RBB.

Dans la présente invention, il est avantageux que les transistors 30 FDSOI soient agencés en structures CMOS optimisées pour le mode RBB.

La figure 5 représente schématiquement une structure CMOS FDSOI optimisée pour le mode RBB. La structure CMOS comporte un transistor 30a FDSOI de type NMOS sur un puits P et un transistor 30b FDSOI de type PMOS sur un puits N. Ainsi, dans la structure CMOS illustré à la figure 5, le substrat 36a du transistor 30a NMOS est de type P (on parle alors de « puits » de type P ou de « caisson » de type P). La source 31a et le drain 32a sont en revanche de type N. Le substrat 36b du transistor 30b PMOS est de type N (on parle alors de « puits » de type N ou de « caisson » de type N). La source 31b et le drain 32b sont en revanche de type P. Cela correspond à un circuit dit « traditionnel » (« Regular Well » dans la littérature anglo-saxonne) optimisé pour le mode RBB, c'est-à-dire permettant de privilégier des tensions de seuil élevées (RVT ou HVT).

Il convient de noter toutefois que rien n'empêcherait d'utiliser des structures CMOS avec un NMOS sur puits N et un PMOS sur puits P (circuit nommé « Flip Well » dans la littérature anglo-saxonne). Un tel circuit est toutefois généralement optimisé pour le mode FBB, c'est-à-dire pour privilégier des tensions de seuil basses (LVT).

Le deuxième mode de réalisation décrit en référence à la figure 3 correspond à une architecture particulièrement compacte (puisqu'elle comporte un unique additionneur). En outre, ce deuxième mode de réalisation offre un niveau de flexibilité accru sur la distribution d'erreur pouvant être obtenue. Il est en effet possible de configurer le circuit de contrôle 15 pour déterminer dynamiquement la valeur de tension de grille arrière à appliquer en fonction d'un niveau de probabilité d'erreur souhaité pour le calcul du produit scalaire. La tension de grille arrière permet de faire varier la tension de seuil des transistors 30 FDSOI de la région 21. Une tension de seuil plus élevée entraine une augmentation du temps de propagation des portes logiques implémentés par ces transistors, et par conséquent une perte de précision dans les calculs.

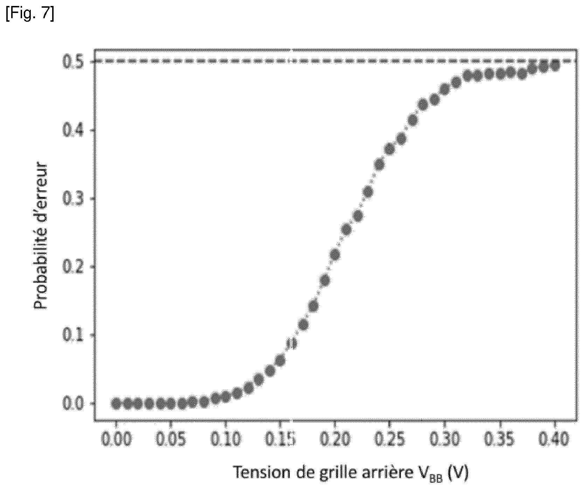

Le graphique présenté à la figure 7 illustre la possibilité de contrôler le niveau de probabilité d'erreur en fonction de la tension de grille arrière $V_{BB}$ appliquée par la source de tension 17 dynamique. Ce graphique représente le niveau de probabilité d'erreur (valeur comprise entre 0 et 1), en fonction de la tension de grille arrière $V_{BB}$ (en Volt), dans le cas où un seul bit de poids faible du résultat de l'addition est impacté. On peut observer sur ce graphique que le niveau de probabilité d'erreur augmente avec la tension de grille arrière et tend vers une valeur limite de 0,5. Les mesures présentées dans le graphique de la figure 7 ont été obtenues sur un circuit numérique 10 similaire à celui décrit ci-avant en référence à la figure 3.

Le choix du nombre $L$ de bits de poids faible que l'on souhaite être impactés par le calcul approximatif, et donc indirectement la détermination de la région 21, participent également à la définition de la distribution d'erreur. Cet aspect est toutefois statique puisqu'il est défini à la conception du circuit numérique 10, et ne peut plus être changé par la suite.

Ce qui a été mentionné précédemment pour le premier mode de réalisation au sujet de la possibilité de configurer le circuit de contrôle 15 pour contrôler dynamiquement quelles additions doivent être effectuées de façon approximative dans le calcul du produit scalaire s'applique également au deuxième mode de réalisation.

La description ci-avant illustre clairement que, par ses différentes caractéristiques et leurs avantages, la présente invention atteint les objectifs fixés. En particulier, le circuit numérique 10 selon l'invention permet d'implémenter une primitive cryptographique pour un algorithme de type LWE, sans avoir à utiliser de composant matériel de type TRNG ou PRNG, et tout en gardant une architecture particulièrement simple, compacte et peu gourmande en consommation énergétique.

La solution proposée offre en outre une bonne flexibilité et une bonne précision sur la probabilité d'erreur pouvant être obtenue pour le calcul du produit scalaire, ainsi que la possibilité d'introduire de l'entropie dans la distribution d'erreur obtenue.

L'invention a été décrite notamment pour une application en cryptographie post-quantique. Rien n'exclut cependant d'envisager d'utiliser le circuit numérique 10 selon l'invention pour d'autres applications, afin notamment de réduire la consommation énergétique du système. Par exemple, le circuit numérique 10 peut être utilisé dans d'autres applications nécessitant des accélérateurs de calcul vectoriel, dans la mesure où ces applications sont résilientes à un certain degré d'approximation (par exemple pour implémenter des réseaux de neurones, notamment dans le cadre du traitement d'images). Le circuit numérique 10 selon l'invention offre alors une bonne flexibilité dans la mise en œuvre d'un compromis entre précision de calcul et consommation énergétique.

## Revendications

1. Circuit numérique (10) pour calculer un produit scalaire entre deux vecteurs de dimension $N$, $N$ étant un nombre entier au moins égal à deux, les deux vecteurs étant notés respectivement $(a_0, a_1, ... , a_j, ... , a_{N-1})$ et $(s_0, s_1, ... , s_j, ... , s_{N-1})$ ;

le circuit numérique (10) comporte un multiplieur (11), un accumulateur (12) comportant au moins un additionneur

(13) et un registre (14), ainsi qu'un circuit de contrôle (15) de l'accumulateur (12) ;
le circuit numérique (10) est configuré pour être cadencé par une horloge, et à un coup d'horloge d'indice $j$, $j$ étant un nombre entier variant entre 0 et $(N - 1)$ :

- le multiplieur (11) est configuré pour calculer un résultat $r_j$ d'une multiplication $a_j \times s_j$ des composantes d'indice $j$ des deux vecteurs,
- l'accumulateur (12) est configuré pour additionner le résultat $r_j$ de la multiplication avec une valeur courante du registre (14), et pour mémoriser un résultat de l'addition dans le registre (14) ;

le circuit de contrôle (15) est configuré pour contrôler l'accumulateur (12) de sorte à effectuer l'addition de façon approximative, c'est-à-dire avec un niveau prédéterminé de probabilité que le résultat de l'addition comporte une erreur, pour au moins une addition parmi les N additions du calcul du produit scalaire.

2. Circuit numérique (10) selon la revendication 1, dans lequel :

- l'accumulateur (12) comporte un unique additionneur (16) implémenté selon la technologie « silicium sur isolant totalement déserté », FDSOI ;
- une région (21) prédéterminée de l'additionneur (16) regroupe des transistors (30) FDSOI formant des portes logiques qui contrôlent un nombre $L$ prédéterminé de bits de poids faible du résultat de l'addition, $L$ étant un nombre entier au moins égal à un ;
- ladite région (21) prédéterminée est connectée à une source de tension (17) permettant d'appliquer une tension de grille arrière aux transistors FDSOI de la région (21), la valeur de la tension de grille arrière pouvant être contrôlée dynamiquement par le circuit de contrôle (15),
- le circuit de contrôle (15) est configuré pour appliquer par défaut une valeur de référence de tension de grille arrière, et pour appliquer une valeur spécifique de tension de grille arrière, différente de la valeur de référence, uniquement pendant l'exécution de ladite au moins une addition devant être effectuée de façon approximative.

3. Circuit numérique (10) selon la revendication 2 dans lequel le circuit de contrôle (15) est configuré pour déterminer dynamiquement la valeur spécifique de tension de grille arrière à appliquer en fonction d'un niveau de probabilité d'erreur souhaité pour le calcul du produit scalaire.

4. Circuit numérique (10) selon l'une quelconque des revendications 2 ou 3 dans lequel les transistors (30) FDSOI sont agencés en structures CMOS comportant chacune un transistor (30a) NMOS sur un puits P et un transistor (30b) PMOS sur un puits N.

5. Circuit numérique (10) selon la revendication 1, dans lequel :

- l'accumulateur (12) comporte un additionneur exact (18) synthétisé spécifiquement pour calculer une addition de façon exacte, un additionneur approximatif (19) synthétisé spécifiquement pour calculer une addition avec le niveau prédéterminé de probabilité d'erreur, et un multiplexeur (20) ;
- pour chaque addition exécutée à un coup d'horloge d'indice $j$, le multiplexeur (20) est configuré par le circuit de contrôle (15) pour sélectionner l'additionneur à utiliser parmi l'additionneur exact (18) et l'additionneur approximatif (19).

6. Circuit numérique (10) selon l'une quelconque des revendications 1 à 5 dans lequel ladite au moins une addition devant être exécutée de façon approximative, parmi les N additions du calcul du produit scalaire, est différente à chaque nouveau calcul de produit scalaire.

7. Circuit numérique (10) selon l'une quelconque des revendications 1 à 6 dans lequel ladite au moins une addition devant être exécutée de façon approximative dans le calcul du produit scalaire est choisie aléatoirement.

8. Circuit numérique (10) selon l'une quelconque des revendications 1 à 7 dans lequel le nombre d'additions devant être exécutées de façon approximative dans le calcul du produit scalaire est contrôlé dynamiquement par le circuit de contrôle (15) en fonction d'un niveau de probabilité d'erreur souhaité pour le calcul du produit scalaire.

9. Dispositif électronique mettant en œuvre un algorithme cryptographique basé sur une technologie d' « apprentissage avec erreurs », LWE, ledit dispositif étant **caractérisé en ce qu'**il comporte au moins un circuit numérique (10) selon l'une quelconque des revendications 1 à 8.

**Patentansprüche**

1. Digitale Schaltung (10) zur Berechnung eines skalaren Produkts zwischen zwei Vektoren der Dimension $N$, wobei $N$ eine ganze Zahl ist, die mindestens gleich zwei ist, wobei die beiden Vektoren jeweils als $(a_0, a_1, ..., a_j, ..., a_{N-1})$ und $(s_0, s_1, ..., s_j, ..., s_{N-1})$ notiert sind;

   die digitale Schaltung (10) weist einen Multiplikator (11), einen Akkumulator (12), der mindestens einen Addierer (13) und ein Register (14) aufweist, sowie eine Steuerschaltung (15) des Akkumulators (12) auf;
   die digitale Schaltung (10) ist so konfiguriert, dass sie durch einen Taktgeber und bei einem Indextakt $j$ getaktet wird, wobei $j$ eine ganze Zahl ist, die zwischen 0 und $(N - 1)$ variiert:

   - der Multiplikator (11) ist so konfiguriert, dass er ein Ergebnis $r_j$ aus einer Multiplikation $a_j \times s_j$ der Indexkomponenten $j$ der beiden Vektoren berechnet,
   - der Akkumulator (12) ist so konfiguriert, dass er das Ergebnis $r_j$ der Multiplikation mit einem aktuellen Wert des Registers (14) addiert und ein Ergebnis der Addition in dem Register (14) speichert;

   die Steuerschaltung (15) ist so konfiguriert, dass sie den Akkumulator (12) so steuert, dass sie die Addition ungefähr durchführt, d. h. mit einer vorbestimmten Wahrscheinlichkeitsstufe, dass das Additionsergebnis einen Fehler aufweist, für mindestens eine Addition unter den N Additionen der Berechnung des skalaren Produkts.

2. Digitale Schaltung (10) nach Anspruch 1, wobei:

   - der Akkumulator (12) einen einzigen Addierer (16) aufweist, der nach der Technologie "vollständig verarmtes Silizium auf Isolator", FDSOI, implementiert ist;
   - ein vorbestimmter Bereich (21) des Addierers (16) vereinigt FDSOI-Transistoren (30), die logische Gatter bilden, die eine vorbestimmte Anzahl $L$ von Bits mit geringem Gewicht des Additionsergebnisses steuern, wobei L eine ganze Zahl von mindestens eins ist;
   - der vorbestimmte Bereich (21) ist mit einer Spannungsquelle (17) verbunden, die es ermöglicht, eine Rückgitterspannung an die FDSOI-Transistoren des Bereichs (21) anzulegen, wobei der Wert der Rückgitterspannung dynamisch von der Steuerschaltung (15) gesteuert werden kann,
   - die Steuerschaltung (15) ist so konfiguriert ist, dass sie standardmäßig einen Referenzwert für die Rückgitterspannung anlegt und nur während der Ausführung der mindestens ungefähr durchzuführenden Addition einen spezifischen Wert für die Rückgitterspannung anlegt, der sich von dem Referenzwert unterscheidet.

3. Digitale Schaltung (10) nach Anspruch 2, wobei die Steuerschaltung (15) so konfiguriert ist, dass sie dynamisch den spezifischen Wert der anzulegenden Rückgitterspannung in Abhängigkeit von einer gewünschten Fehlerwahrscheinlichkeitsstufe für die Berechnung des skalaren Produkts bestimmt.

4. Digitale Schaltung (10) nach einem der Ansprüche 2 oder 3, wobei die FDSOI-Transistoren (30) in CMOS-Strukturen angeordnet sind, die jeweils einen NMOS-Transistor (30a) an einem P-Schacht und einen PMOS-Transistor (30b) an einem N-Schacht aufweisen.

5. Digitale Schaltung (10) nach Anspruch 1, wobei:

   - der Akkumulator (12) einen exakten Additionsgeber (18), der speziell synthetisiert wird, um eine Addition exakt zu berechnen, einen ungefähren Additionsgeber (19), der speziell synthetisiert wird, um eine Addition mit dem vorbestimmten Fehlerwahrscheinlichkeitsniveau zu berechnen, und einen Multiplexer (20) aufweist;
   - für jede Addition, die mit einem Indextakt $j$ ausgeführt wird, wird der Multiplexer (20) von der Steuerschaltung (15) so konfiguriert, dass er den zu verwendenden Additionsgeber aus dem exakten Additionsgeber (18) und dem ungefähren Additionsgeber (19) auswählt.

6. Digitale Schaltung (10) nach einem der Ansprüche 1 bis 5, wobei die mindestens eine ungefähr auszuführende Addition unter den $N$ Additionen der Berechnung des skalaren Produkts bei jeder neuen Berechnung des skalaren Produkts unterschiedlich ist.

7. Digitale Schaltung (10) nach einem der Ansprüche 1 bis 6, wobei die mindestens eine Addition, die in der Berechnung des skalaren Produkts ungefähr ausgeführt werden soll, zufällig ausgewählt wird.

8. Digitale Schaltung (10) nach einem der Ansprüche 1 bis 7, wobei die Anzahl der Additionen, die in der Berechnung des skalaren Produkts ungefähr ausgeführt werden müssen, von der Steuerschaltung (15) dynamisch in Abhängigkeit von einem gewünschten Fehlerwahrscheinlichkeitsniveau für die Berechnung des skalaren Produkts gesteuert wird.

9. Elektronische Vorrichtung zur Umsetzung eines kryptografischen Algorithmus basierend auf einer "Lernen mit Fehlern"-Technologie, LWE, wobei die Vorrichtung **dadurch gekennzeichnet ist, dass** sie mindestens eine digitale Schaltung (10) nach einem der Ansprüche 1 bis 8 aufweist.

**Claims**

1. A digital circuit (10) for computing a scalar product between two $N$-dimension vectors, $N$ being an integer at least equal to two, the two vectors being respectively denoted $(a_0, a_1, \ldots, a_j, \ldots, a_{N-1})$ and $(s_0, s_1, \ldots, s_j, \ldots, s_{N-1})$;

    the digital circuit (10) including a multiplier (11), an accumulator (12) including at least one adder (13) and a register (14), as well as a control circuit (15) of the accumulator (12);
    the digital circuit (10) is configured to be clocked by a clock, and at a clock tick of index $j$, $j$ being an integer varying between 0 and $(N - 1)$ :

        - the multiplier (11) is configured to compute a result $r_j$ of a multiplication $a_j \times s_j$ of the components of index $j$ of the two vectors,
        - the accumulator (12) is configured to add the result $r_j$ of the multiplication with a current value of the register (14), and to memorise a result of the addition in the register (14);

    the control circuit (15) is configured to control the accumulator (12) so as to perform the addition in an approximate manner, i.e. with a predetermined level of probability that the result of the addition includes an error, for at least one addition amongst the N additions of the computation of the scalar product.

2. The digital circuit (10) according to claim 1, wherein:

    - the accumulator (12) includes one single adder (16) implemented according to the "Fully-Depleted Silicon-On-Insulator", FDSOI, technology;
    - a predetermined region (21) of the adder (16) groups together FDSOI transistors (30) forming logic gates which control a predetermined number $L$ of least significant bits of the result of the addition, $L$ being an integer at least equal to one;
    - said predetermined region (21) is connected to a voltage source (17) allowing applying a back-gate voltage to the FDSOI transistors of the region (21), the value of the back-gate voltage could be dynamically controlled by the control circuit (15),
    - the control circuit (15) is configured to apply by default a back-gate voltage reference value, and to apply a back-gate voltage specific value, different from the reference value, only during the execution of said at least one addition having to be performed in an approximate manner.

3. The digital circuit (10) according to claim 2, wherein the control circuit (15) is configured to dynamically determine the back-gate voltage specific value to be applied according to an error probability level desired for the computation of the scalar product.

4. The digital circuit (10) according to any one of claims 2 or 3, wherein the FDSOI transistors (30) are arranged into CMOS structures each including an NMOS transistor (30a) on a P well and a PMOS transistor (30b) on an N well.

5. The digital circuit (10) according to claim 1, wherein:

    - the accumulator (12) includes an exact adder (18) synthesised specifically to compute an addition in an exact manner, an approximate adder (19) synthesised specifically to compute an addition with the predetermined error probability level, and a multiplexer (20);
    - for each addition executed at a clock tick of the index $j$, the multiplexer (20) is configured by the control circuit (15) to select the adder to be used amongst the exact adder (18) and the approximate adder (19).

6. The digital circuit (10) according to any one of claims 1 to 5, wherein said at least one addition to be executed in an approximate manner, amongst the N additions of the computation of the scalar product, is different at each new scalar product computation.

7. The digital circuit (10) according to any one of claims 1 to 6, wherein said at least one addition to be executed in an approximate manner in the computation of the scalar product is randomly selected.

8. The digital circuit (10) according to any one of claims 1 to 7, wherein the number of additions to be executed in an approximate manner in the computation of the scalar product is dynamically controlled by the control circuit (15) according to an error probability level desired for the computation of the scalar product.

9. An electronic device implementing a cryptographic algorithm based on a "Learning With Errors", LWE, technology, said device being **characterised in that** it includes at least one digital circuit (10) according to any one of claims 1 to 8.

[Fig. 1]

[Fig. 2]

EP 4 530 823 B1

[Fig. 3]

[Fig. 4]

14

[Fig. 5]

[Fig. 6]

[Fig. 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. BELLIZIA et al.** When Bad News Become Good News - Towards Usable Instances of Learning With Physical Errors. *IACR Transactions on Cryptographic Hardware and Embedded Systems*, August 2022, 1-24